# EUROPEAN PATENT SPECIFICATION

(11) **EP 2 661 168 B1**
(45) Date of publication and mention of the grant of the patent: **13.11.2019**
(21) Application number: 11855214.0
(22) Date of filing: 29.12.2011
(51) Int. Cl.: A01B 49/00, A01B 49/02, A01B 49/04

(54) **AGRICULTURAL MACHINE**
LANDWIRTSCHAFTSMASCHINE
MACHINE AGRICOLE

(30) Priority: 04.01.2011 SE 1150003
(43) Date of publication of application: 13.11.2013
(73) Proprietor: Väderstad Holding AB, 590 21 Väderstad (SE)
(72) Inventor: STARK, Crister, S-590 21 Väderstad (SE)
(74) Representative: Keijser Bergöö, Malin Katarina
(86) International application number: PCT/SE2011/051608
(87) International publication number: WO 2012/093958

(56) References cited:
- EP-A1- 1 529 431
- WO-A1-03/000028
- GB-A- 2 145 315
- US-A- 1 301 043
- US-A- 2 455 147
- US-A- 2 697 903
- US-A- 5 632 343
- US-A1- 2003 037 935
- US-A1- 2003 085 044
- US-A1- 2008 142 233

## Description

The invention refers to an agricultural machine according to the precharacterising portion of Claim 1.

### TECHNICAL AREA

An agricultural machine of the above-mentioned type is known through US 2,697,903, US2008/0142233 and US 4,884,391 which disclose agricultural machines with a rotary cutter assembly with thereafter arranged discs and coulters. US 4,150,724 refers to a rotary cutter assembly comprising rotary cutter sections mounted in double rows in a frame.

A rotary cutter (in American 'stalk cutter') is a type of implement or a part of an implement that has existed in North America for a long time. The first were horse-drawn and were intended to slice up and bury tobacco plants.

Modern agriculture sees a need for efficiently burying stubble, particularly of oilseed plants and maize but also cereals. This is of importance since stubble and other harvest residues have become increasingly abundant with rising yield levels and since the demands from farmers are strengthening so that with a very shallow cultivation all stubble can be buried and efficient mixing is achieved of the small amount of soil that is cultivated loose and the relatively large amount of plant residues that is commonly found on a field after harvest. By very shallow soil cultivation is meant here a few centimetres loosening of soil. This result is difficult to achieve with ordinary machines such as a disc implement with following roller implement.

Agricultural machines with rotary cutters according to the above-mentioned US 4,884,391 and US 4,150,724 are used for breaking down stubble, straw and other harvest residues, but both have the disadvantage that they only cultivate the stubble and do not mix soil and harvest residues, since they do not work loose any soil. The agricultural machine in US 4,884,391 comprises a rotary cutter that is followed by solid straight rolling discs that only cut narrow slits in the ground without working loose any soil. Since no soil is worked loose there is no mixing of soil and plant residues, so therefore there is slower decomposition of the harvest residues. There is also no levelling of a field's irregularities, wheel tracks, etc.

### OBJECT OF THE INVENTION

The object of the invention is to achieve an agricultural machine that eliminates the above-mentioned problems and simultaneously gives good decomposition of stubble, straw and other harvest residues.

### SUMMARY OF THE INVENTION

This object is achieved through a device according to the characterising portion of Claim 1.

The sub-claims describe advantageous embodiments of the device according to the invention.

Through the device according to the invention a rotary cutter assembly is combined with a separate following disc assembly with inclined and preferably dished discs, which assemblies slices harvest residues, such as stubble, straw and other residues, in the field with their sharp edges in two relative to each other mainly perpendicular directions and through the action of the disc assembly also mix the sliced harvest residues with loosened soil. Thereafter the soil is reconsolidated for best contact between soil and harvest residues. The following disc assembly gives consequently a very effective total decomposition of the stubble. Through arranging the rotary cutter and the disc assembly after each other in the driving direction the risk is reduced of stubble residues and other material being collected up, which makes the machine more effective. Furthermore scrapers can be mounted on the disc assembly. The disc assembly can consist of one or several rows of discs.

To make shallow cultivation effective the implement should have good responsiveness. This responsiveness is very important, since the ambition is to cultivate the soil very shallowly. If a work implement such as in this case a rotary cutter assembly is 3 m. long in the transverse direction and is made rigid in one piece, it can not follow the irregularities of the ground. If the ground has hollows and humps it is difficult to achieve a uniform working depth. Therefore such an implement has to be able to adapt itself to the ground as much as is practically possible. According to the invention the rotary cutter assembly is therefore divided into sections with intermediary suspending devices. At an additional further development the edges of the knife blades follow a helical form, which gives a uniform responsiveness With one pass that goes fast and uses a minimum of energy, the standing stubble can be cultivated in and the loosened soil mixed in with the harvest residues (straw, stubble, chaff, any weeds, etc.) as uniformly as possible. It is important that the loosened soil 'dirties' in principle all the straw since the soil contains bacteria and other microorganisms, which together with water and heat break down the straw. In order for this process to occur very effectively it is important that straw and stubble are sliced and shredded up as much as possible. Straw and stubble most often have a wax-like surface, on which it is difficult to get decomposition to act rapidly. Therefore the decomposition occurs most effectively in shredded parts or from the inside of the straw or stubble pipe (straw and stubble are tube-shaped).

The device according to the invention comprises a rotary cutter, which is reboundingly pliable and preferably adjustable in a hydraulic way. It is also divided up into suitable section lengths in order to follow the irregularities of the ground. The device according to the invention solves the described problem of shallow cultivation and mixing of soil and harvest residues in an effective manner. The farmer can then work in and shred up stubble and straw and at the same time loosen a small amount of soil. Thereafter follow the discs of the agricultural machine, which are suitably set to a working depth of only a few cm. The discs of the agricultural machine slice up the soil mainly perpendicular to the direction that the rotary cutter has sliced up the soil and an effective loosening of the soil to a shallow and predetermined depth is therefore obtained. All this soil is mixed together with straw and harvest residues by the agricultural machine incorporating the rotary cutter assembly.

Another problem that can also be solved with the present invention is that the defined rotary cutter assembly acts as a 'rotating levelling board'. Implements with levelling boards are shown for example in GB 2 307 389. They are effective in soil that has only a slight amount of plant residues, but function less well in soil that is burdened with a larger fraction of plant residues.

By providing the agricultural machine according to the invention with a brake or drive device so that the peripheral velocity of the rotary cutter sections can be regulated in relation to the ground surface a rotating levelling board can be achieved. If the rotary cutter sections are slowed down by approx. 20% compared with the driving velocity, when they are set at a suitable working depth, they take with them a small but continuously exchanged amount of soil. In this way a form of levelling can be achieved that functions even in considerable harvest residue quantities. In stubble this braking contributes to the stubble being more effectively ripped up and roots also being ripped up.

An agricultural machine according to the invention comprising a rotary cutter assembly has its greatest application in already cultivated soil, but which contains harvest residues, for example in soil that is to be prepared for spring or autumn drilling. This retardation or alternatively acceleration of the velocity should be so designed that the farmer can alter the relationship between the driving velocity and the peripheral velocity. This can take place manually or automatically. Depending on how complex and expensive one wishes to make a system a suitable level can be chosen. It should then be simplest and least expensive to provide the rotary cutter assembly with at least one brake device, which can be for example electromagnetic or hydraulic and in a further development functions as do anti-lock brakes on a car. Braking or driving of the rotary cutter assembly can also take place hydraulically with hydraulic motor/hydraulic pump and suitable regulation of this. The knife blades of the rotary cutter assembly can advantageously give the rotary cutter a helical shape, which contributes among other things to a smoother passage and a more uniform release of soil in a braked/driven embodiment.

At a further development of the device according to the invention the knife blades in each rotary cutter section are provided with knife blade holders, such as bulkhead plates or end plates, which are assembled so much displaced in the direction of rotation in the centre axle that a relatively slight helical shape arises in the longitudinal direction of the knife blade. The torsion or helical shape of the knife blade can be mainly around a straight centre line of the resp. knife blade. The slight curvature that the blade acquires on being screwed fast on the holders gives the knife blade a minor pre-tension at assembly. However the stress with this pre-tension displays no disadvantages on the function of the rotary cutter. The cutting surfaces of the rotary cutter against stubble parts or other harvest residues in the field come to be mainly perpendicular to the cutting surfaces of the following discs. This gives more effective cultivation of the ground.

### DRAWING SUMMARY

The invention is described more closely below with reference to the attached drawings, which show preferred embodiments.
Figure 1 shows a partial perspective view from the side of an agricultural machine, which is drawn by a tractor, with a rotary cutter, which has a device according to the present invention.
Figure 2 shows a planar view of the agricultural machine in Fig. 1.
Figure 3 shows a side view of the agricultural machine in Figs. 1 and 2.
Figure 4 shows a partial side view of the agricultural machine with the rotary cutter.
Figure 5 shows a partial planar view on a larger scale of the agricultural machine with the rotary cutter.
Figure 6 shows a partial side view on a larger scale of a further development of a rotary cutter section that comprises part of the device according to the invention with built-in magnets.
Figure 7 shows a partial perspective view of a further development of a rotary cutter section that comprises part of the device according to the invention, where a knife blade has been dismantled and is shown loose.
Fig. 8 shows a schematic planar view of a field during work without machine and tractor.

### DETAILED DESCRIPTION OF PREFERRED EMBODIMENTS

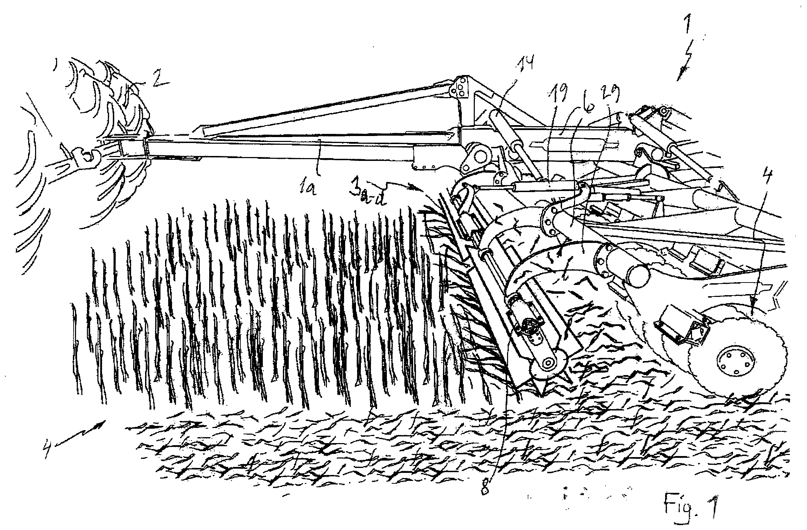

Fig. 1 shows an agricultural machine or host machine 1 with a drawbar 1a, which is coupled to a draught vehicle, such as a tractor 2, with a device according to the invention comprising among other implements a rotary cutter assembly 3 and a disc assembly 4. The agricultural machine 1 is shown in Fig. 1 in work on a stubblefield with for example rape stubble. Sunflowers, maize and a range of other crops also leave a considerable amount of harvest residues that can be dealt with by this implement combination. The rotary cutter assembly 3 also does the work of a soil cultivator in clean soil, i.e. it functions in a multitude of different conditions.

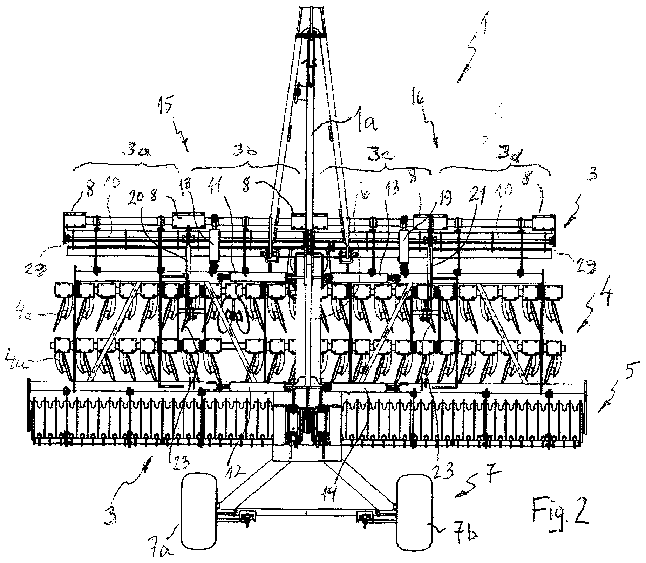

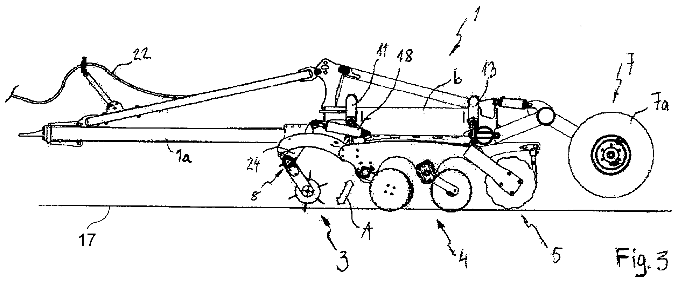

Figs. 2 and 3 show a planar view and a side view respectively of the agricultural machine 1 with the forward mounted rotary cutter assembly 3. Behind the rotary cutter assembly 3 is mounted first a disc assembly 4 with inclined discs 4a, which are preferably dished and which are arranged in two rows of the so-called X-shape type, and thereafter a roller assembly 5 in the form of packer rollers or support rollers. The rotary cutter assembly 3 is divided into four sections 3a - d, which in the embodiment shown are comprised of two on each side of the in upward folding halves arranged agricultural machine 1. The division is not limited to four sections, as within the framework of the invention the rotary cutter assembly can be divided up into a desired number of sections. The drawbar 1a is connected with the frame 6 of the machine. At the rear end of the machine 1 and fastened at the frame 6 is mounted a transport wheel device 7 consisting of raisable and lowerable wheels 7a and 7b. In Fig. 3 the wheel device 7 is shown raised and the machine 1 in working position.

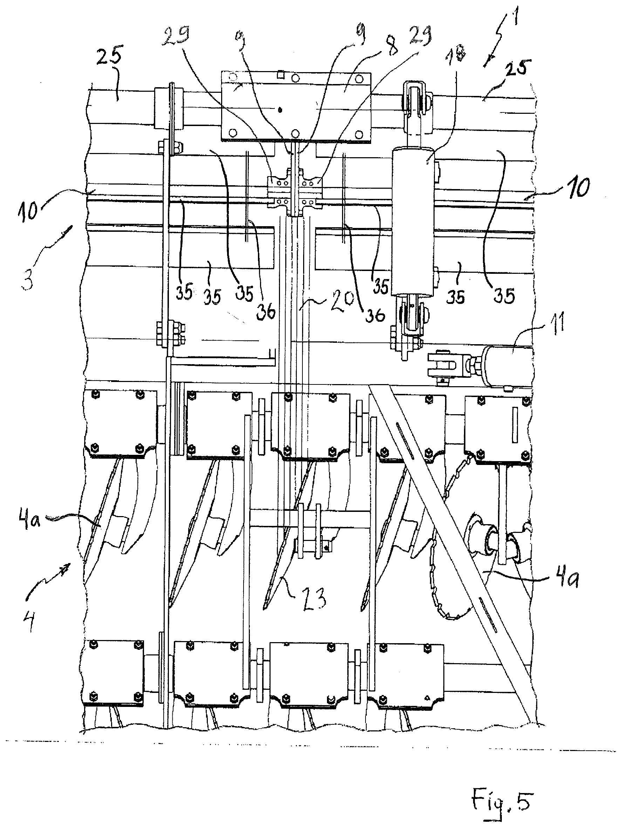

From Fig. 2 it can also be seen that the device according to the invention comprises suspending devices in the form of elastic suspension apparatuses 8 and bearings apparatuses 29, by means of which the rotary cutter sections 3a - d are suspended. The elastic suspension apparatuses 8 with preferably rebounding rubber elements are arranged between each rotary cutter section 3a - d and at the outer ends of the rotary cutter. These suspension apparatuses 8 are fastened at link arms 9, which are rotatably connected with the centre axles 10 of the rotary cutter sections 3a - d. The bearings apparatuses 29 are described more closely below with reference to Fig. 5. Two pairs of hydraulic cylinders 11, 12 and 13, 14 are arranged pairwise on each side 15 and 16 of the machine for when activated lowering the sides of the machine 1 along a conceptual line in the extension of the drawbar 1a upwards to a transport position or downwards to a working position. Fig. 3 shows the working position with the wheels folded up to the upper position and the implements consisting of the rotary cutter assembly 3, the disc assembly 4 and the roller assembly 5 in interaction with the soil 17. For engagement towards the soil two hydraulic cylinders 18 and 19 are arranged, which can be other means, such as electrical adjustment apparatuses. Fig. 2 also shows that the uncultivated spaces between the sections of the rotary cutter (indicated by the elongated parallel solid lines at 20 and 21) are adapted to be cultivated by following discs 23 of the disc assembly 4 of the agricultural machine 1 in order not to leave any part of the field uncultivated.

To the left in Fig. 3 is shown the drawing device 1a with indicated hydraulic hoses 22, which are adapted to be coupled to the tractor. Fig. 3 also shows the rotary cutter assembly 3 with the end of the outer elastic suspension apparatus 8 and one of the hydraulic cylinders 18 for engagement of sections 3a - d of the rotary cutter assembly 3 towards the soil. An arrow A shows how the rotary cutter sections 3a - d can be rotated around their joint points. Behind the rotary cutter assembly the discs 4a of the host machine rotate to the pre-set working depth and cultivate the soil and mix soil and plant residues. The packer rollers or support rollers 5, which are arranged after the disc assembly 4 in order to consolidate the soil also keep the machine at a predetermined depth.

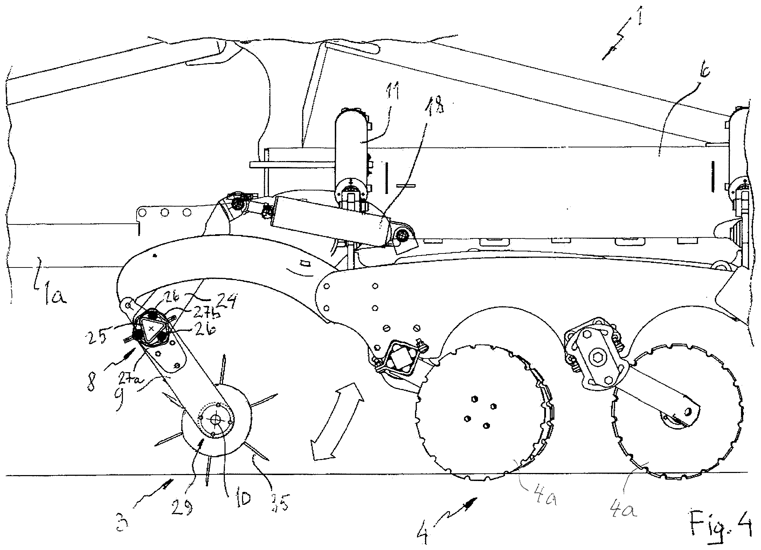

Fig. 4 shows a partial side view of the machine 1 with rotary cutter assembly 3 and its suspension. The rotary cutter assembly 3 comprises rotary cutter sections 3a - d with mainly in the transverse direction of the machine elongated knife blades 35, 35a arranged along the centre axle 10. The hydraulic cylinders 19 for adjustment of the rotary cutter sections 3a - d are coupled to the lever arms 24, which rotate at triangular pipe 25 fastened at the lever arms, which pipe is incorporated in the elastic suspension apparatuses 8, which comprise rubber rods 26, which are arranged between the pipe 25 and two to each other fast screwed bearing case halves 27a, b. The elastic suspension apparatuses 8 are fastened at the link arms 9, which extend downwards and are via the bearings apparatuses 29 connected to the ends of the centre axles 10 of the rotary cutters 3.

The elastic suspension apparatuses 8 provide the scope to apply a considerable downward directed force on the rotary cutter sections 3a - d. The rotary cutter sections 3a - d have despite this force the potential to move in the vertical direction on stress in order to adjust themselves to irregularities of the ground and to rebound up if the field has solid objects in the form of for example large stones.

Fig. 5 shows a partial planar view of the agricultural machine 1 and its rotary cutter assembly 3. The mainly downward directed link arms 9, which are fastened at the elastic suspension apparatuses 8, are designed as relatively slim steel plates. These link arms 9 must be strong enough to transfer the desired force to the rotary cutter sections 3a - d but still weak enough to accept the angular error or the angular deviation in the transverse direction of the machine that arises when one end of the rotary cutter sections 3a - d rebounds up or down in relation to the other end. These link arms 9 are suitably screwed fast with several screws at the elastic suspension apparatuses 8. At their lower ends they have suitable holes for fastening the bearings apparatuses 29 of the rotary cutter sections 3a - d with screws with sunken heads in order to allow assembly in the least possible space. This solution is chosen in order e.g. for reasons of space to be able to assemble the rotary cutter sections 3a - d on a line with a minimum of uncultivated soil/stubble between the sections. Fig. 5 also shows marked with solid parallel lines the area 20, 21 that the rotary cutter cannot cultivate. This space is orientated so that a disc 23 of the discs 4a in the disc assembly 4 of the machine 1 or also a cultivator tine or similar works in this area so as not to leave an uncultivated strip in the field. The device according to the invention also comprises suspending devices in the form of the bearings apparatuses 29, which are assembled at the centre axles 10 of the rotary cutter sections with the aim of achieving individual rebound of the ends of the rotary cutter sections. The angular error or angular deviation between said rotary cutter sections 3a - d can also be taken up in bearings apparatuses 29 at the fastening of the centre axle 10 at the connected to the frame 6 link arms 9, preferably through the bearings apparatuses 29 being spherically arranged or built into a pliable material, for example rubber.

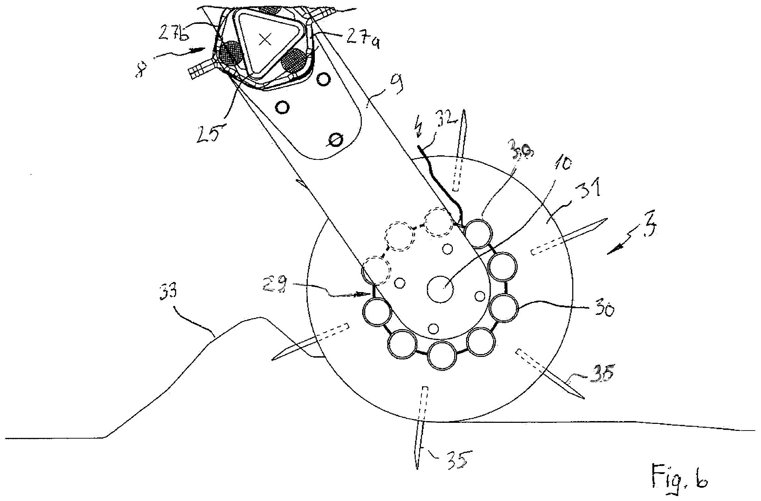

Fig. 6 shows schematically a further development of the device according to the invention, where a brake or drive device comprises electromagnets 30, which are arranged at at least one of the end walls 31 of the rotary cutter sections 3a - d and which can influence the resp. link arm 9. Through the brake or drive device the periphery of the rotary cutter sections 3a - d is given a rotation velocity that is lower than the rotation velocity which the periphery of the rotary cutter sections would have had if they could roll freely on abutment against the soil. From the electrical system of the tractor 2 current can be fed via an electrical cable 32, where through an electric, not shown device is provided for example a pulsation in a predetermined way, so that the rotary cutter sections are brought to a stop for short periods, preferably several times per second. Other ways to achieve this are by hydraulic means or for example with a disc brake, in which cases the oil pressure is adapted to pulse in order to lower the velocity in the desired way. The velocity can also be regulated if the rotary cutter sections 3a - d drive a not shown hydraulic pump, the output of which is regulated with a manual or controlled throttle valve. A small soil wall 33 has been schematically included in front of the rotary cutter 3 in Fig. 6. Through the rotary cutter sections 3a - d pushing a small amount of soil ahead of them a form of 'leveller' and therefore levelling of irregularities in the soil is achieved. In the same way the rotary cutter sections 3a - d can be driven with a higher peripheral velocity relative to the ground.

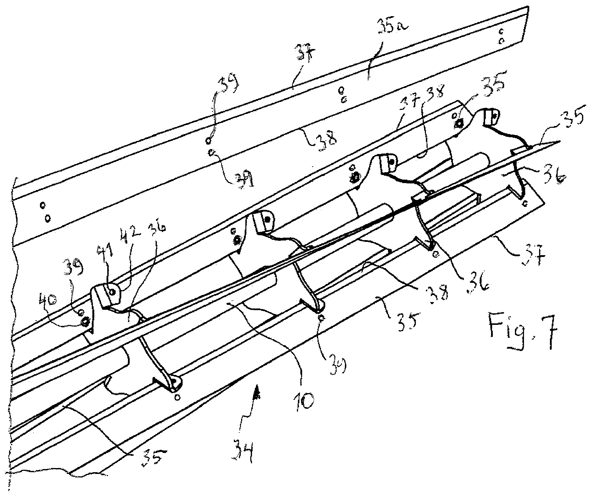

An additional further development of the device according to the invention is shown in Fig. 7. At a rotary cutter section 34 with elongated knife blades 35 assembled mainly in the transverse direction at similar internal spacing in the direction of rotation of the roller sections 3a - d the knife blades 35 have been angled or given a helical shape. This can give the rotary cutter assembly 3 a quieter and smoother passage. One of the knife blades 35a has been dismantled in order to show more clearly how the knife blades 35, 35a are fastened on knife blade holders 36. The knife blade holders 36 are assembled along the centre axle 10 somewhat displaced in the direction of rotation, so that they each extend along a conceptual helix. The knife blades 35, 35a are advantageously screwed fast at the holders 36, such as bulkhead plates or end plates. If the knife blades 35, 35a have a slight helical shape the knives can remain mainly straight or be given a slight helical shape in the manufacturing process. The knives need a sharp edge or cutting surface 37 in order to function effectively. This takes place through the edge of the knife blade 35 being honed or milled so that the edge 37 adopts an angle, for example within the area 5-10 degrees. This edge 37 becomes over time through use worn and blunt and it is therefore advantageous if the knife blades 35, 35a can also be delivered with the opposite edge 38 sharpened, which knife blades 35, 35a are reversibly assembled at the bulkhead plates or end plates 36. Holes 39 are created in the knife blades 35, 35a for fastening by means of bolt fastenings 40 in holes 41 in flanges 42 of the holders 36.

Fig. 7 shows a detailed picture of a rotary cutter section 3a - d with relatively slight helical shape, so slight that the knife blade 35, 35a can be twisted around a straight centre line. The slight curvature that every knife blade 35, 35a is given on being screwed fast on the holders 36 results in the knife blade acquiring a slight pre-tension on assembly. This stress through the pre-tension however displays no disadvantages for the function of the rotary cutter sections 3a - d. An advantage is if the edges or cutting surfaces of the knife blades 35, 35a against stubble parts or other harvest residues in the field are mainly perpendicular to the edges or cutting surfaces of the discs 4a of the following disc assembly 4. This gives an effective cultivation of the ground.

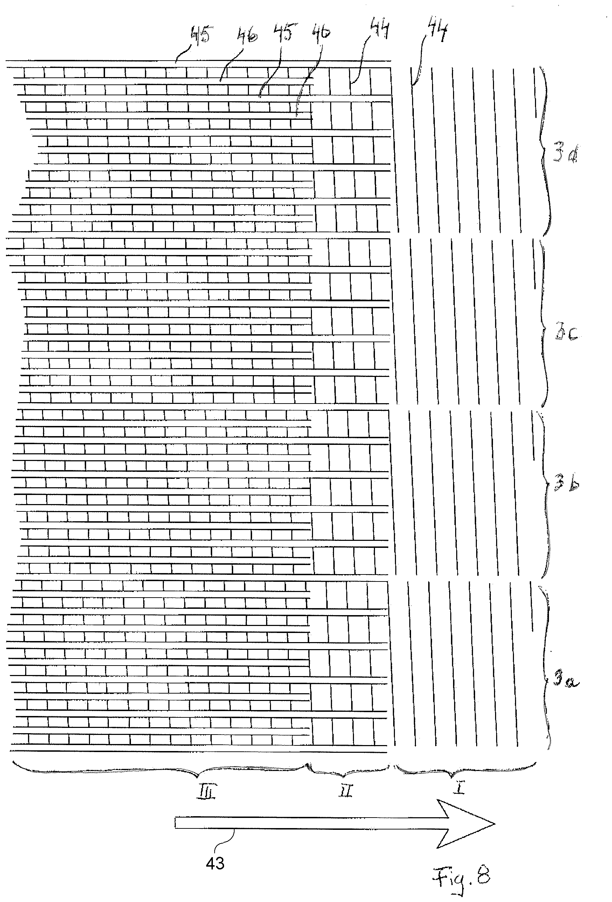

Fig. 8 shows the work in the field that a machine 1 with a device according to the invention can execute if it is moved in the direction of the arrow 43. In Fig. 8 machine and towing tractor have been omitted and the field is shown schematically during cultivation. Furthermore the loosened soil has also been omitted in Fig. 8 to show better the work/pattern left in the soil after each implement.

The first zone I displays a pattern of mainly parallel, practically perpendicular to the driving direction 43 extending depressions 44, which the edges of the knife blades 35, 35a arranged essentially arranged transverse relative to the driving direction of the rotary cutter sections 3a - d leave behind, provided that the sections 3a - d of the rotary cutter assembly 3 are engaged to the ground with a suitably adapted force. In this example it is assumed that the rotary cutter assembly 3, as shown in Figs. 1 and 2, has four rotary cutter sections 3a - d. The engagement force towards the ground, which is achieved by means of hydraulic cylinders 18 in Figs. 1 - 4, can amount to several thousand Newtons per metre working width. The ability, i.e. the engagement force of the hydraulic cylinders 18, which the rotary cutter 3 has to penetrate into the ground depends on how much straw, stubble and other harvest residues the rotary cutter has to turn over and cultivate and how hard the soil is. The engagement force of hydraulic cylinders 18 can be set accordingly before work in consideration of these parameters.

The second zone II shows the cultivated area worked by the rotary cutter sections 3a - d which area now has furrows 45 created by the first row of discs 4a. The tracks or furrows have a certain size at this depth setting, at greater working depth they are broader and deeper and at smaller working depth they are smaller.

The third zone III is cultivated with the rotary cutter sections 3a - d and both rows of discs 4a, wherein additional furrows 46 are created by the second row of discs in the disc assembly 3, the edges of which discs 4a, which are adapted to create the furrows 45, 46 in the ground, are mainly perpendicular to the radial outer edges 37 of the knife blades 35, 35a.

The disc assembly 4 is an assembly with two rows of discs of the type X-shape arranged across the driving direction 43 (as is shown in Fig. 2) or V-form or other previously know disc assembly. The disc assembly 4 has parallel disc rows with one or two discs on every rebounding holder. The main issue is that the rotary cutter assembly 3 is followed by a disc assembly 4, which covers the extension of the rotary cutter assembly 3 in the transverse direction relative to the driving direction 43.

The invention can be varied in a plurality of different ways within the scope of the attached Claims, although the above-described embodiments are to be preferred.

## Claims

1. An agricultural machine (1) with three implements (3, 4, 5) for soil cultivation, a frame (6) and said implement carrying suspending devices (8, 29) between implement and frame, **characterised in that** it comprises firstly a forward mounted implement in the form of a rotary cutter assembly (3), which consists of a plurality of rotary cutter sections (3a - d) with elongated knife blades (35, 35a) arranged mainly in the transverse direction of the machine and along a centre axle (10), said suspending devices for the rotary cutter assembly (3) comprising elastic suspension apparatuses (8), which are arranged between the frame (6) of the machine (1) and the link arm (9) arranged at each centre axle (10) of a rotary cutter section (3a - d), secondly after the rotary cutter assembly in the driving direction (43) a following implement in the form of a soil-cultivating disc assembly (4), which has two parallel rows (4a, 4b) of discs and the edges or cutting surfaces of which inclined discs (4a), which are adapted to create furrows (45, 46) in the ground, are mainly perpendicular to the radial outer edges or cutting surfaces (37) of the knife blades (35), and thirdly after the disc assembly in the driving direction (43) a following implement in the form of a roller assembly (5).

2. Machine according to Claim 1, **characterised in that** said disc assembly has bowed discs and is of the type X-shape or V-shape.

3. Machine according to Claim 1 or 2, **characterised in that** said knife blades are fastened along the centre axles (10) of the rotary cutter sections (3a - d) at with the centre axles connected knife holders (36), such as bulkhead plates or end plates, and that said knife holders (36) are displaced in the direction of rotation of each centre axle (10) so that said radially directed knife blades (35) are inclined or form a helical shape.

4. Machine according to any one of Claims 1 - 3, **characterised in that** each rotary cutter section (3a - d) comprises at least one means (18, 19), preferably a hydraulic cylinder, for engaging said rotary cutter sections at the soil.

5. Machine according to any one of Claims 1 - 4, **characterised in that** said suspending devices for the rotary cutter assembly (3) comprises for said rotary cutter sections (3a - d) intended bearings apparatuses (29), which are assembled at the centre axle (10) of each rotary cutter section with the aim of achieving an individual journalling in bearings of the ends of the rotary cutter sections.

6. Machine according to Claim 5, **characterised in that** an angular error or an angular deviation between said rotary cutter sections (3a - d) is adapted to be taken up in the fastenings of said bearings apparatuses (29) at the centre axles (10) with link arms (9) connected at the frame (6), preferably through said bearings apparatuses being spherically arranged or built into a pliable material, for example rubber.

7. Machine according to any one of Claims 1 - 6, **characterised in that** the edges (37, 38) of the knife blades (35) are honed or milled so that each edge, preferably along both long edges of the knife blades, acquires an angle for example within the area 5-10 degrees.

8. Machine according to any of Claims 1 - 7, **characterised in that** said elastic suspension apparatuses (8) are arranged at the link arms (9) at the opposite end from the centre axles (10) and that two neighbouring rotary cutter sections (3a - d) can have a shared elastic suspension apparatus.

9. Machine according to any one of Claims 1 - 8, **characterised in that** it also comprises at least one further additional implement (23), such as at least one disc, one cultivator tine or similar, which is adapted to cultivate away an uncultivated space between two neighbouring rotary cutter sections (3a - d).

10. Machine according to any one of Claims 1 - 9, **characterised in that** a brake or drive device (30) is arranged at at least one end of each rotary cutter section (3a - d).

11. Machine according to Claim 10, **characterised in that** said brake or drive device (30) comprises arranged at at least one end wall (31) of each rotary cutter section (3a - d) between the end wall and its carrying link arm (9) magnets (30), which are adapted to achieve a pulsing with predetermined frequency of the resp. rotary cutter sections (3a - d), so that the resp. rotary cutter sections are brought to a stop for short periods or driven with the aim of lowering the peripheral velocity of the resp. rotary cutter relative to the ground.

12. Machine according to Claim 10, **characterised in that** said brake or drive device comprises hydraulic means or disc brakes, where the oil pressure is adapted to pulse, which are adapted to achieve a pulsing with predetermined frequency of the resp. rotary cutter sections (3a - d), so that the resp. rotary cutter sections are brought to a stop for short periods or driven with the aim of lowering the peripheral velocity of the resp. rotary cutter relative to the ground.

## Patentansprüche

1. Landwirtschaftliche Maschine (1) mit drei Geräten (3, 4, 5) zur Bodenkultivierung, wobei ein Rahmen (6) und das Gerät Aufhängevorrichtungen (8, 29) zwischen Gerät und Rahmen tragen, **dadurch gekennzeichnet, dass** sie umfasst
erstens ein vorne montiertes Gerät in der Form einer Rotationsschneideranordnung (3), die aus einer Mehrzahl von Rotationsschneiderabschnitten (3a-d) mit länglichen Messerklingen (35, 35a) besteht, die hauptsächlich in der Querrichtung der Maschine und entlang einer Mittelachse (10) angeordnet sind, wobei die Aufhängevorrichtungen für die Rotationsschneideranordnung (3) elastische Aufhängeapparate (8) umfassen, die zwischen dem Rahmen (6) der Maschine (1) und dem Verbindungsarm (9) angeordnet sind, angeordnet an jeder Mittelachse (10) eines Rotationsschneiderabschnittes (3a-d),
zweitens nach der Rotationsschneideranordnung in der Antriebsrichtung (43) ein nachfolgendes Gerät in der Form einer Bodenkultivierungsscheibenanordnung (4), die zwei parallele Reihen (4a, 4b) von Scheiben aufweist und wobei die Kanten oder Schneidflächen von den geneigten Scheiben (4a), die angepasst sind, Furchen (45, 46) in dem Boden zu erzeugen, hauptsächlich senkrecht zu den radialen äußeren Kanten oder Schneidflächen (37) der Messerklingen (35) sind, und
drittens nach der Scheibenanordnung in der Antriebsrichtung (43) ein nachfolgendes Gerät in der Form einer Walzenanordnung (5).

2. Maschine gemäß Anspruch 1, **dadurch gekennzeichnet, dass** die Scheibenanordnung gebogene Scheiben aufweist und vom Typ X-Form oder V-Form ist.

3. Maschine gemäß Anspruch 1 oder 2, **dadurch gekennzeichnet, dass** die Messerklingen entlang den Mittelachsen (10) der Rotationsschneiderabschnitte (3a-d) an mit den Mittelachsen verbundenen Messerhaltern (36) befestigt sind, wie z.B. Trennwandplatten oder Endplatten, und dass die Messerhalter (36) in der Rotationsrichtung jeder Mittelachse (10) versetzt sind, sodass die radial gerichteten Messerklingen (35) geneigt sind oder eine schraubenförmige Form bilden.

4. Maschine gemäß einem der Ansprüche 1-3, **dadurch gekennzeichnet, dass** jeder Rotationsschneiderabschnitt (3a-d) mindestens ein Mittel (18, 19), vorzugsweise einen hydraulischen Zylinder, zum in Eingriff bringen der Rotationsschneiderabschnitte am Boden umfasst.

5. Maschine gemäß einem der Ansprüche 1 bis 4, **dadurch gekennzeichnet, dass** die Aufhängevorrichtungen für die Rotationsschneideranordnung (3)
für die Rotationsschneiderabschnitte (3a-d) vorgesehene Lagervorrichtungen (29) umfassen, die an der Mittelachse (10) jedes Rotationsschneiderabschnittes mit dem Ziel zusammengebaut sind, eine individuelle Lagerung in den Lagern der Enden der Rotationsschneiderabschnitte zu erreichen.

6. Maschine gemäß Anspruch 5, **dadurch gekennzeichnet, dass** ein Winkelfehler oder eine Winkelabweichung zwischen den Rotationsschneiderabschnitten (3a-d) angepasst ist, in den Befestigungen der Lagerapparate (29) an den Mittelachsen (10) mit Verbindungsarmen (9), die mit dem Rahmen (6) verbunden sind, aufgenommen zu werden, vorzugsweise dadurch, dass die Lagerapparate kugelförmig angeordnet oder in ein biegsames Material, z.B. Gummi, eingebaut sind.

7. Maschine gemäß einem der Ansprüche 1-6, **dadurch gekennzeichnet, dass** die Kanten (37, 38) der Messerklingen (35) gehont oder gefräst sind, sodass jede Kante, vorzugsweise entlang beider langer Kanten der Messerklingen, einen Winkel z.B. innerhalb des Bereiches 5-10 Grad erhält.

8. Maschine gemäß einem der Ansprüche 1-7, **dadurch gekennzeichnet, dass** die elastischen Aufhängeapparate (8) an den Verbindungsarmen (9) an dem gegenüberliegenden Ende von den Mittelachsen (10) angeordnet sind und dass zwei benachbarte Rotationsschneiderabschnitte (3a-d) einen gemeinsamen elastischen Aufhängeapparat aufweisen können.

9. Maschine gemäß einem der Ansprüche 1-8, **dadurch gekennzeichnet, dass** sie auch mindestens ein weiteres zusätzliches Gerät (23) umfasst, wie z.B. mindestens eine Scheibe, einen Kultiviererzinken oder Ähnliches, das angepasst ist, einen unkultivierten Raum zwischen zwei benachbarten Rotationsschneiderabschnitten (3a-d) zu kultivieren.

10. Maschine gemäß einem der Ansprüche 1 bis 9, **dadurch gekennzeichnet, dass** an mindestens einem Ende jedes Rotationsschneiderabschnittes (3a-d) eine Brems- oder Antriebsvorrichtung (30) angeordnet ist.

11. Maschine gemäß Anspruch 10, **dadurch gekennzeichnet, dass** die Brems- oder Antriebsvorrichtung (30) an mindestens einer Endwand (31) jedes Rotationsschneiderabschnittes (3a-d) zwischen der Endwand und seines tragenden Verbindungsarms (9) angeordnete Magnete (30) umfasst, die angepasst sind, ein Pulsieren der entsprechenden Rotationsschneiderabschnitte (3a-d) mit vorgegebener Frequenz zu erreichen, sodass die entsprechenden Rotationsschneiderabschnitte für kurze Zeiträume zum Stillstand gebracht oder mit dem Ziel angetrieben werden, die Umfangsgeschwindigkeit des entsprechenden Rotationsschneiders relativ zum Boden zu verringern.

12. Maschine gemäß Anspruch 10, **dadurch gekennzeichnet, dass** die Brems- oder Antriebsvorrichtung hydraulische Mittel oder Scheibenbremsen umfasst, bei denen der Öldruck angepasst ist zu pulsieren, die angepasst sind, ein Pulsieren mit vorbestimmter Frequenz der entsprechenden Rotationsschneiderabschnitte (3a-d) zu erreichen, sodass die entsprechenden Rotationsschneiderabschnitte für kurze Zeiträume zum Stillstand gebracht oder mit dem Ziel angetrieben werden, die Umfangsgeschwindigkeit des entsprechenden Rotationsschneiders relativ zum Boden zu verringern.

## Revendications

1. Une machine agricole (1) comportant trois outils (3, 4, 5) pour le travail du sol, un châssis (6) et lesdits dispositifs de suspension (8, 29) porteurs d'outil situés entre l'outil et le châssis, **caractérisée en ce qu'**elle comprend en premier lieu un outil monté vers l'avant sous la forme d'un ensemble de coupe rotatif (3), qui consiste en une pluralité de sections (3a à d) à couteaux rotatifs comportant des lames de couteaux allongées (35, 35a) agencées principalement dans la direction transversale de la machine et suivant un axe central (10), lesdits dispositifs de suspension pour l'ensemble de coupe rotatif (3) comprenant des appareils (8) de suspension élastique, qui sont agencés entre le châssis (6) de la machine (1) et le bras de liaison (9) agencé sur chaque axe central (10) d'une section à couteaux rotatifs (3a à d), en deuxième lieu, après l'ensemble de coupe rotatif dans le sens de déplacement (43), un outil suivant sous la forme d'un ensemble de disques (4) pour le travail du sol qui comporte deux rangées parallèles (4a, 4b) de disques, les arêtes ou surfaces de coupe desquels disques inclinés (4a), adaptées pour former des sillons (45, 46) dans le sol, étant principalement perpendiculaires aux arêtes extérieures radiales ou surfaces de coupe (37) des lames de couteau (35), et en troisième lieu, après l'ensemble à disques dans la direction de déplacement (43), un outil suivant sous forme d'un ensemble à rouleau (5).

2. Machine selon la revendication 1, **caractérisée en ce que** ledit ensemble à disques a des disques courbés et est du type en forme de X ou de V.

3. Machine selon la revendication 1 ou la revendication 2, **caractérisée en ce que** lesdites lames de couteau sont fixées le long des axes centraux (10) des sections à couteaux rotatifs (3a à d) avec les porte-couteaux (36) reliés aux axes centraux, tels que des plaques de cloison ou des plaques d'extrémité, et **en ce que** lesdits porte-couteaux (36) sont déplacés dans le sens de rotation de chaque axe central (10) afin que lesdites lames (35) dirigées radialement soient inclinées ou forment une forme hélicoïdale.

4. Machine selon l'une quelconque des revendications 1 à 3, **caractérisée en ce que** chaque section (3a à d) à couteaux rotatifs comprend au moins un moyen (18, 19), de préférence un cylindre hydraulique, pour amener en engagement avec lesdites sections à couteaux rotatifs au niveau du sol.

5. Machine selon l'une quelconque des revendications 1 à 4, **caractérisée en ce que** lesdits dispositifs de suspension pour l'ensemble de coupe rotative (3) comprennent, pour lesdites sections (3a à d) à couteaux rotatifs, des appareils dédiés formant paliers (29) qui sont assemblés au niveau de l'axe central (10) de chaque section à couteaux rotatifs dans le but de réaliser un guidage individuel en rotation dans des paliers des extrémités des sections à couteaux rotatifs.

6. Machine selon la revendication 5, **caractérisée en ce qu'**une erreur angulaire ou une déviation angulaire entre les sections de coupe rotatives (3a à d) est adaptée pour être reprise dans les fixations des appareils (29) formant roulements au niveau des axes centraux (10) avec des bras de liaison (9) reliés au châssis (6), de préférence par le fait que les appareils formant roulements sont agencés sphériquement ou construits en un matériau flexible, par exemple en caoutchouc.

7. Machine selon l'une quelconque des revendications 1 à 6, **caractérisée en ce que** les bords (37, 38) des lames de couteau (35) sont affûtés ou fraisés de telle sorte que chaque bord, de préférence le long des deux bords longs des lames de couteau, acquièrent un angle par exemple dans la zone allant de 5 à 10 degrés.

8. Machine selon l'une quelconque des revendications 1 à 7, **caractérisée en ce que** lesdits dispositifs (8) de suspension élastique sont agencés au niveau des bras de liaison (9) à l'extrémité opposée des axes centraux (10) et **en ce que** deux sections de coupe rotatives voisines (3a à d) peuvent avoir un dispositif de suspension élastique commun.

9. Machine selon l'une quelconque des revendications 1 à 8, **caractérisée en ce qu'**elle comprend en outre au moins un autre outil supplémentaire (23), tel qu'au moins un disque, une dent de cultivateur ou similaire, qui est adapté pour cultiver un espace non cultivé situé entre deux sections de coupe rotative (3a à d) voisines.

10. Machine selon l'une quelconque des revendications 1 à 9, **caractérisée en ce qu'**un dispositif (30) de freinage ou d'entraînement est agencé au niveau d'au moins une extrémité de chaque section de coupe rotative (3a à d).

11. Machine selon la revendication 10, **caractérisée en ce que** ledit dispositif (30) de freinage ou d'entraînement comprend des aimants (30) agencés au niveau d'au moins une paroi d'extrémité (31) de chaque section de coupe rotative (3a à d) entre la paroi d'extrémité et son bras de liaison porteur (9), lesquels sont adaptés pour réaliser une impulsion avec une fréquence prédéterminée des sections de coupe rotative (3a à d) respectives, afin que les sections de coupe rotative respectives soient amenées à l'arrêt pendant une courte période ou entraînées dans le but de réduire la vitesse périphérique des couteaux rotatifs respectifs par rapport au sol.

12. Machine selon la revendication 10, **caractérisée en ce que** ledit dispositif de freinage ou d'entraînement comprend des moyens hydrauliques ou des freins à disque, la pression d'huile étant adaptée pour générer des impulsions, qui sont adaptées pour obtenir des impulsions avec une fréquence prédéterminée des sections de coupe rotatives (3a à d) respectives, de sorte que les sections de coupe rotatives respectives sont amenées à l'arrêt pendant de courtes périodes ou entraînées dans le but de diminuer la vitesse périphérique des couteaux rotatifs respectifs par rapport au sol.
